# EUROPÄISCHE PATENTANMELDUNG

(11) **EP 4 393 675 A1**
(43) Veröffentlichungstag der Anmeldung: **03.07.2024**
(21) Anmeldenummer: 23216725.4
(22) Anmeldetag: 14.12.2023
(51) Int. Cl.: B29C 45/14, B29C 45/16, B29L 31/30

(54) **VERFAHREN ZUR HERSTELLUNG EINES AUSSENVERKLEIDUNGSTEILS ODER EINES ZIERTEILS FÜR FAHRZEUGE**

(30) Priorität: 27.12.2022 DE 102022134814; 09.03.2023 DE 102023105798
(71) Anmelder: REHAU Automotive SE & Co. KG, 95111 Rehau (DE)
(72) Erfinder: Reichstein, Johann, 95448 Bayreuth (DE)

(57) **Zusammenfassung**

Die Erfindung betrifft ein Verfahren zur Herstellung eines Außenverkleidungsteils (10) oder eines Zierteils für Fahrzeuge unter Verwendung eines Spritzgusswerkzeugs (1), umfassend die nachfolgenden Schritte: Erzeugen eines Trägersubstrats (3) in einer Werkzeugkavität (2) des Spritzgusswerkzeugs (1) aus einem ersten Kunststoffmaterial, Erzeugung einer Zusatzkavität (6) zwischen dem erzeugten Trägersubstrat (3) und einem zur Erzeugung der Zusatzkavität (6) vorgesehenen Werkzeugteil (7) oder Wechselwerkzeugteil (7') des Spritzgusswerkzeugs (1), Einbringen eines weiteren Kunststoffmaterials in die Zusatzkavität (6), wobei das weitere Kunststoffmaterial nach seiner Erstarrung oder Verfestigung eine Oberflächendeckschicht (8) auf oder über dem Trägersubstrat (3) ausbildet, wobei die Oberflächendeckschicht (8) im Reaction Injection Moulding-Verfahren (RIM) auf das Trägersubstrat (3) aufgebracht wird, Öffnen des Spritzgusswerkzeugs (1) und Entformen des gebildeten, das Trägersubstrat (3) und die Oberflächendeckschicht (8) umfassenden, Außenverkleidungsteils (10) oder Zierteils, wobei bei dem Verfahrensschritt der Erzeugung des Trägersubstrats (3) vorab eine Folie (9) in die Werkzeugkavität (2) eingelegt wird, die von dem ersten Kunststoffmaterial überspritzt oder hinterspritzt wird, wobei die Abmessungen der Folie (9) so gewählt und die Werkzeugkavität (2) so ausgebildet ist, dass die Folie (9) das erzeugte Trägersubstrat (3) abschnittsweise oder vollständig randseitig überragt und, dass diese über das Trägersubstrat (3) überstehende Folie (9) im Verfahrensschritt des Einbringens des weiteren Kunststoffmaterials als Dichtung (9') zwischen dem Werkzeugteil (7) und dem Spritzgusswerkzeug (1) oder als Dichtung (9') zwischen dem Wechselwerkzeugteil (7') und dem Spritzgusswerkzeug (1) fungiert.

## Beschreibung

Die vorliegende Erfindung betrifft ein Verfahren zur Herstellung eines Außenverkleidungsteils oder eines Zierteils für Fahrzeuge unter Verwendung eines Spritzgusswerkzeugs, umfassend die nachfolgenden Schritte:
- Erzeugen eines Trägersubstrats in einer Werkzeugkavität des Spritzgusswerkzeugs aus einem ersten Kunststoffmaterial,
- Erzeugung einer Zusatzkavität zwischen dem erzeugten Trägersubstrat und einem zur Erzeugung der Zusatzkavität vorgesehenen Werkzeugteil oder Wechselwerkzeugteil des Spritzgusswerkzeugs,
- Einbringen eines weiteren Kunststoffmaterials in die Zusatzkavität, wobei das weitere Kunststoffmaterial nach seiner Erstarrung oder Verfestigung eine Oberflächendeckschicht auf oder über dem Trägersubstrat ausbildet, wobei die Oberflächendeckschicht im Reaction Injection Moulding-Verfahren (RIM) auf das Trägersubstrat aufgebracht wird,
- Öffnen des Spritzgusswerkzeugs und Entformen des gebildeten, das Trägersubstrat und die Oberflächendeckschicht umfassenden, Außenverkleidungsteils oder Zierteils.

Bei dem sogenannten Reaction Injection Moulding (RIM) oder Reinforced Reaction Injection Moulding (RRIM) handelt es sich ein Urformverfahren zur Herstellung von Kunststoffformteilen wie Außenverkleidungsteilen oder Zierteilen für Fahrzeuge. Dabei werden mindestens zwei Komponenten (und eventuell weitere Zusätze) in einem Mischer intensiv gemischt und unmittelbar anschließend als Reaktionsmasse in eine formgebende Zusatzkavität gespritzt oder geflutet. Die Aushärtung findet in der Zusatzkavität statt. Kennzeichnend für dieses Verfahren ist unter anderem ein geringer Zuhaltedruck der Formwerkzeuge. Die Reaktionsmassen aus dem RIM-Prozess weisen gegenüber thermoplastischen Schmelzen aufgrund ihrer niedrigen Viskosität ein günstigeres Fließverhalten auf. Somit lassen sich bei gleicher Wanddicke größere Fließwege erreichen. Dem steht ein erhöhter Aufwand bei der Dichtung und Dosierung gegenüber.

Ein gattungsgemäßes Verfahren gibt zur Lösung des Problems einer verbesserten Abdichtung der Zusatzkavität gegenüber dem Spritzgusswerkzeug und dem Trägersubstrat an eine zusätzliche Dichtung durch Anspritzen einer als "verlorene Dichtung" bezeichneten Rands an dem Trägersubstrat an. Die verlorene Dichtung wird nach Abschluss des Verfahrens wieder entfernt. Das zusätzliche Anspritzen einer Dichtung ist vergleichsweise aufwendig und teuer. Auch die Notwendigkeit die Dichtung wieder zu entfernen, vergrößert die Anzahl der Verfahrensschritte und erhöht die Fertigungskosten weiter.

Aufgabe der vorliegenden Erfindung ist es ein alternatives Verfahren anzugeben, dass eine verbesserte Abdichtung mit einfacheren und kostengünstigeren Mitteln erreicht.

Diese Aufgabe wird vorliegend gelöst durch ein Verfahren zur Herstellung eines Außenverkleidungsteils oder eines Zierteils für Fahrzeuge unter Verwendung eines Spritzgusswerkzeugs, umfassend die nachfolgenden Schritte:
- Erzeugen eines Trägersubstrats in einer Werkzeugkavität des Spritzgusswerkzeugs aus einem ersten Kunststoffmaterial,
- Erzeugung einer Zusatzkavität zwischen dem erzeugten Trägersubstrat und einem zur Erzeugung der Zusatzkavität vorgesehenen Werkzeugteil oder Wechselwerkzeugteil des Spritzgusswerkzeugs,
- Einbringen eines weiteren Kunststoffmaterials in die Zusatzkavität, wobei das weitere Kunststoffmaterial nach seiner Erstarrung oder Verfestigung eine Oberflächendeckschicht auf oder über dem Trägersubstrat ausbildet, wobei die Oberflächendeckschicht im Reaction Injection Moulding-Verfahren (RIM) auf das Trägersubstrat aufgebracht wird,
- Öffnen des Spritzgusswerkzeugs und Entformen des gebildeten, das Trägersubstrat und die Oberflächendeckschicht umfassenden, Außenverkleidungsteils oder Zierteils,
wobei erfindungsgemäß bei dem Verfahrensschritt der Erzeugung des Trägersubstrats vorab eine Folie in die Werkzeugkavität eingelegt wird, die von dem ersten Kunststoffmaterial überspritzt oder hinterspritzt wird, wobei die Abmessungen der Folie so gewählt und die Werkzeugkavität so ausgebildet ist, dass die Folie das erzeugte Trägersubstrat abschnittsweise oder vollständig randseitig überragt und, dass diese über das Trägersubstrat überstehende Folie im Verfahrensschritt des Einbringens des weiteren Kunststoffmaterials als Dichtung zwischen dem Werkzeugteil und dem Spritzgusswerkzeug oder als Dichtung zwischen dem Wechselwerkzeugteil und dem Spritzgusswerkzeug fungiert.

Als Werkzeugteil ist vorliegend gemeint, dass die für das Erzeugen des Trägersubstrats verwendete Werkzeugform prinzipiell weiterverwendet wird, und durch verschiebbare Bestandteile in diesem Werkzeugteil die Zusatzkavität erzeugt wird. Ein Wechselwerkzeugteil ist eine von der Erzeugung des Trägersubstrats verschiedene Werkzeugform, wie dies beispielsweise bei Etagenwendespritzgusswerkzeugen, oder Wendespritzgusswerkzeugen oder Würfelspritzgusswerkzeugen der Fall ist.

Die Folie kann eine Dekorfolie und/oder eine Funktionsfolie sein und ein Bestandteil des Außenverkleidungsteils oder des Zierteils werden. In dieser Verfahrensvariante ergibt sich der zusätzliche Vorteil, dass die für ein Dekor und/oder eine Funktion notwendige Dekorfolie und/oder Funktionsfolie bereits vorhanden und vorgesehen ist. Das erfindungsgemäße überstehen lassen der Folie über das Trägersubstrat ist in diesem Fall besonders kostengünstig umsetzbar. Eine Funktionsfolie kann insbesondere eine Heizfolie (z.B. mit Heizdrähten) oder eine Antennenfolie (z.B. mit Antennendrähten) sein.

Die Folie kann auf der der späteren Oberflächendeckschicht abgewandten Seite des Trägersubstrat angeordnet werden. In diesem Fall wird die Folie von dem ersten Kunststoffmaterial des Trägersubstrats zumindest bereichsweise überspritzt.

Alternativ kann die Folie zwischen dem Trägersubstrat und der zu bildenden Oberflächendeckschicht angeordnet werden. In diesem Fall wird die Folie von dem ersten Kunststoffmaterial des Trägersubstrats zumindest bereichsweise hinterspritzt.

Die Folie kann nach dem Entformen von dem Trägersubstrat entfernt werden, wobei das Material der Folie zu dem ersten Kunststoffmaterial unterschiedlich ist und ausgebildet ist, mit dem ersten Kunststoffmaterial eine leicht wieder abziehbare Verbindung einzugehen. Bevorzugt lässt sich die Folie per Hand abziehen. Die abgezogene Folie kann bevorzugt mehrfach wiederverwendet werden in dem erfindungsgemäßen Verfahren.

Die Folie kann eine Dicke im Bereich von 10 µm bis 3.000 µm, bevorzugt im Bereich von 50 µm bis 1.500 µm, weiter bevorzugt im Bereich von 150 µm bis 1.000 µm, weiter bevorzugt im Bereich von 250 µm bis 750 µm aufweisen.

Das erste Kunststoffmaterial kann ein transparentes oder transluzentes Kunststoffmaterial zur Ausbildung eines transparenten oder transluzenten Trägersubstrats sein. Hierdurch lassen sich durchleuchtbare oder partiell durchleuchtbare Außenverkleidungsteile oder Zierteile herstellen, wenn auch die Oberflächendeckschicht und gegebenenfalls die am Trägersubstrat verbleibende Folie aus einem transparenten oder transluzenten Material, insbesondere Kunststoffmaterial gebildet werden oder sind. Die Folie könnte alternativ bereichsweise peroriert werden (beispielsweise mittels Laserstrahlung) oder perforiert sein um eine partielle Durchleuchtbarkeit zu realisieren.

Das transparente oder transluzente Kunststoffmaterial des Trägersubstrats und/oder der Folie kann beispielsweise Polypropylen und/oder Polycarbonat und/oder Polyethylenterephthalat und/oder Acrylnitril-Butadien-Styrol und/oder Polymethylmethacrylat und/oder Polyamid und/oder Polyurethan umfassen.

Das weitere Kunststoffmaterial der Oberflächendeckschicht kann insbesondere Polyurethan oder Polyurea umfassen.

Die Folie kann dreidimensional vorgeformt sein, wenn diese in die Werkzeugkavität eingelegt wird. Hierdurch lassen sich komplexe Geometrien des Trägersubstrat realisieren.

Die Folie kann beim Einlegen in die Werkzeugkavität flach und unverformt sein und in der Werkzeugkavität durch das Anlegen einer Luftdruckdifferenz (entweder durch Ansaugen oder Anpressen an eine Fläche der Werkzeugkavität) an die Folie vor der Erzeugung des Trägersubstrats vorgeformt werden.

Die Folie kann vor oder nach dem Einlegen als Variante ergänzend mit Wärme beaufschlagt werden (beispielsweise mittels Infrarotstrahler oder Heißluft) um die Verformbarkeit der Folie zu erhöhen.

Neben dem weiteren Kunststoffmaterial kann als Variante des Verfahrens die Folie mit einem dritten Kunststoffmaterial partiell oder vollflächig hinterspritzt oder überspritzt werden.

Ein Außenverkleidungsteil kann insbesondere eine Kühlerverkleidung, eine Stoßfängerverkleidung, eine Schwellerverkleidung, eine Kotflügelverkleidung, eine Heckklappenaußenverkleidung, eine Spoileraußenhaut, eine Türaußenverkleidung oder ein Ziergitters eines Fahrzeugs oder ein Bestandteil einer Kühlerverkleidung, einer Stoßfängerverkleidung, einer Schwellerverkleidung, einer Kotflügelverkleidung, einer Heckklappenaußenverkleidung, einer Spoileraußenhaut, einer Türaußenverkleidung oder eines Ziergitters eines Fahrzeugs sein.

Im Folgenden wird die Erfindung anhand lediglich Ausführungsbeispiele darstellender Zeichnungen erläutert. Es zeigen schematisch:
- Fig. 1: einen mit dem Verfahren hergestelltes, partiell durchleuchtbares Außenverkleidungsteil eines Fahrzeuges;
- Fig. 2 und 3: Erläuterungen der Schritte einer ersten Variante des Verfahrens;
- Fig. 4 und 5: Erläuterungen der Schritte einer zweiten Variante des Verfahrens;
- Fig. 6: ein Außenverkleidungsteil gefertigt nach der ersten Variante des Verfahrens;
- Fig. 7: ein Außenverkleidungsteil gefertigt nach der zweiten Variante des Verfahrens.

In den Figuren werden gleiche oder funktionsgleiche Elemente mit den gleichen Bezugszeichen versehen.

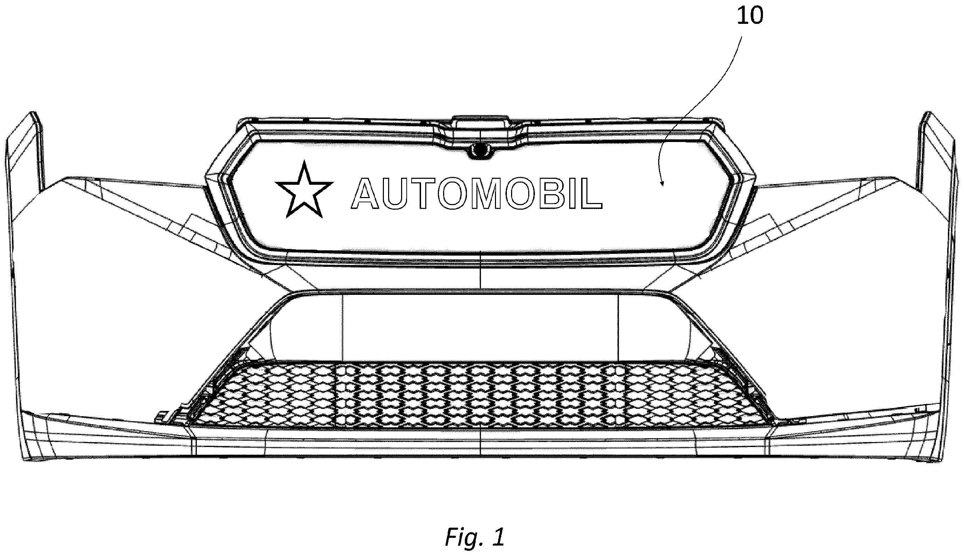

Die Fig. 1 zeigt eine Frontalansicht eines mit dem erfindungsgemäßen Verfahren hergestellten Außenverkleidungsteils 10 für ein Fahrzeug. Das Außenverkleidungsteil 10 ist als eine Dekorblende 10 ausgebildet, die Bestandteil einer Stoßfängerverkleidung ist.

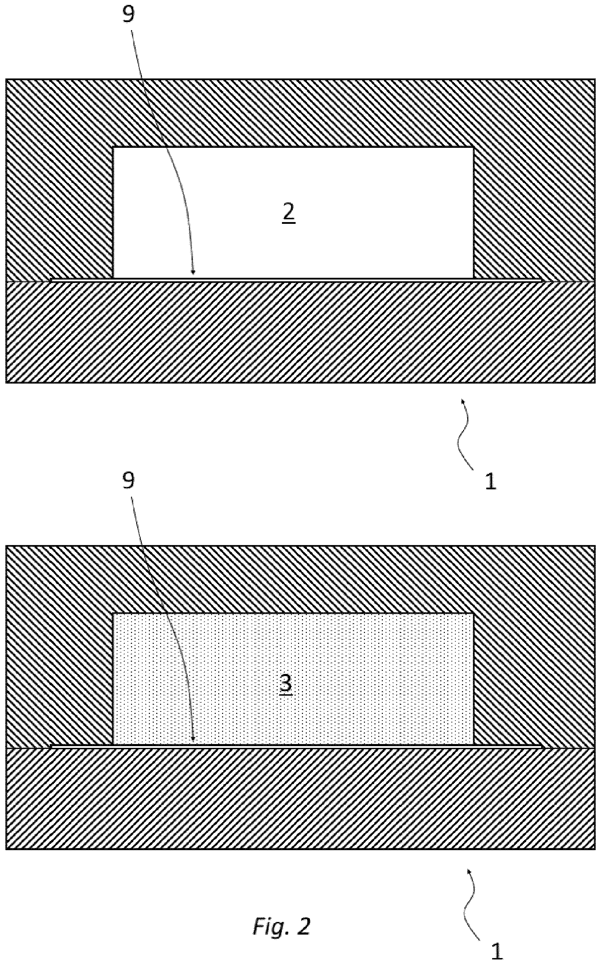

Die Fig. 2 zeigt einige Schritte des Verfahrens zur Herstellung eines Außenverkleidungsteils 10 oder eines Zierteils für Fahrzeuge unter Verwendung eines Spritzgusswerkzeugs 1.

In einer Werkzeugkavität 2 des Spritzgusswerkzeugs 1 wird ein Trägersubstrats 3 aus einem ersten Kunststoffmaterial erzeugt (vgl. Fig. 2 untere Abbildung). Bei diesem Verfahrensschritt der Erzeugung des Trägersubstrats 3 wird vorab eine Folie 9 in die Werkzeugkavität 2 eingelegt (vgl. erneut Fig. 2 obere Abbildung), die von dem ersten Kunststoffmaterial überspritzt oder hinterspritzt wird, wobei die Abmessungen der Folie 9 so gewählt und die Werkzeugkavität 2 so ausgebildet ist, dass die Folie 9 das erzeugte Trägersubstrat 3 abschnittsweise oder vollständig randseitig überragt.

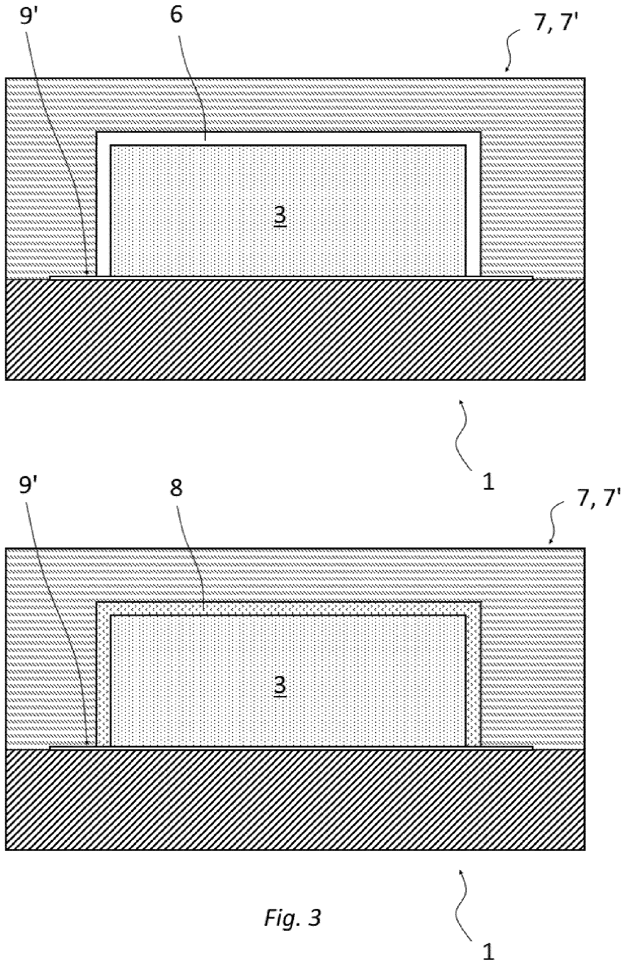

In der Fig. 3 sind weitere Verfahrensschritte verdeutlicht. Es wird eine Zusatzkavität 6 zwischen dem erzeugten Trägersubstrat 3 und einem zur Erzeugung der Zusatzkavität 6 vorgesehenen Werkzeugteil 7 oder Wechselwerkzeugteil 7' des Spritzgusswerkzeugs 1 erzeugt (vgl. Fig. 3 obere Abbildung). Nachfolgend erfolgt der Schritt des Einbringens eines weiteren Kunststoffmaterials in die Zusatzkavität 6, wobei das weitere Kunststoffmaterial nach seiner Erstarrung oder Verfestigung eine Oberflächendeckschicht 8 auf oder über dem Trägersubstrat 3 ausbildet, wobei die Oberflächendeckschicht 8 im Reaction Injection Moulding-Verfahren (RIM) auf das Trägersubstrat 3 aufgebracht wird (vgl. Fig. 3 untere Abbildung). Die über das Trägersubstrat 3 überstehende Folie 9 fungiert in diesem Verfahrensschritt des Einbringens des weiteren Kunststoffmaterials als Dichtung 9' zwischen dem Werkzeugteil 7 und dem Spritzgusswerkzeug 1 oder als Dichtung 9' zwischen dem Wechselwerkzeugteil 7' und dem Spritzgusswerkzeug 1.

Der abschließende Verfahrensschritt des Öffnens des Spritzgusswerkzeugs 1 und Entformen des gebildeten, das Trägersubstrat 3 und die Oberflächendeckschicht 8 umfassenden, Außenverkleidungsteils 10 oder Zierteils ist hier nicht näher dargestellt.

In der in Fig. 2 und Fig. 3 beschriebenen ersten Variante des Verfahrens wird die Folie 9 auf der der späteren Oberflächendeckschicht 8 abgewandten Seite des Trägersubstrat 3 angeordnet. Wie in Fig. 2 in der unteren Abbildung erkennbar wird die Folie 9 also mit dem ersten Kunststoffmaterial überspritzt.

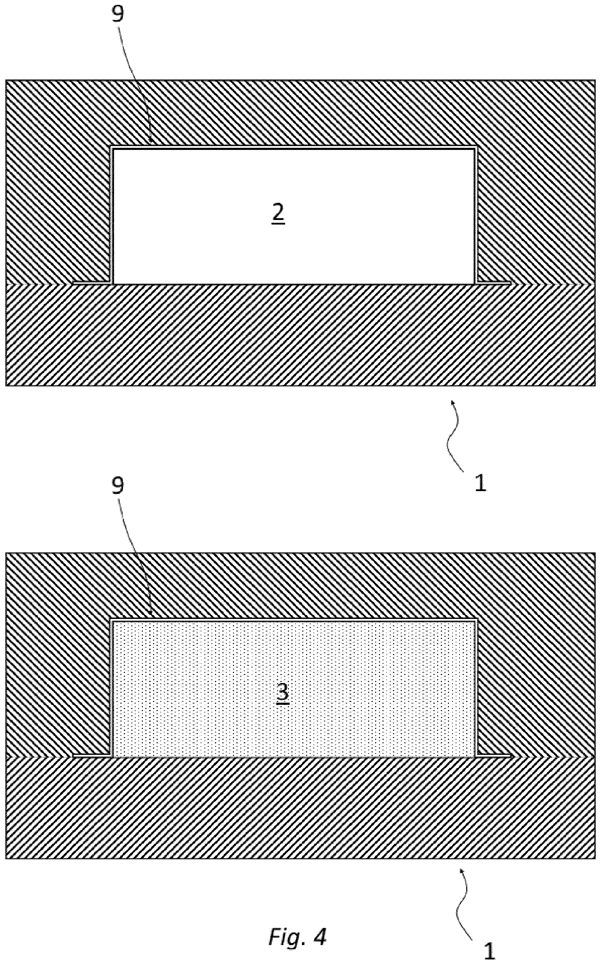

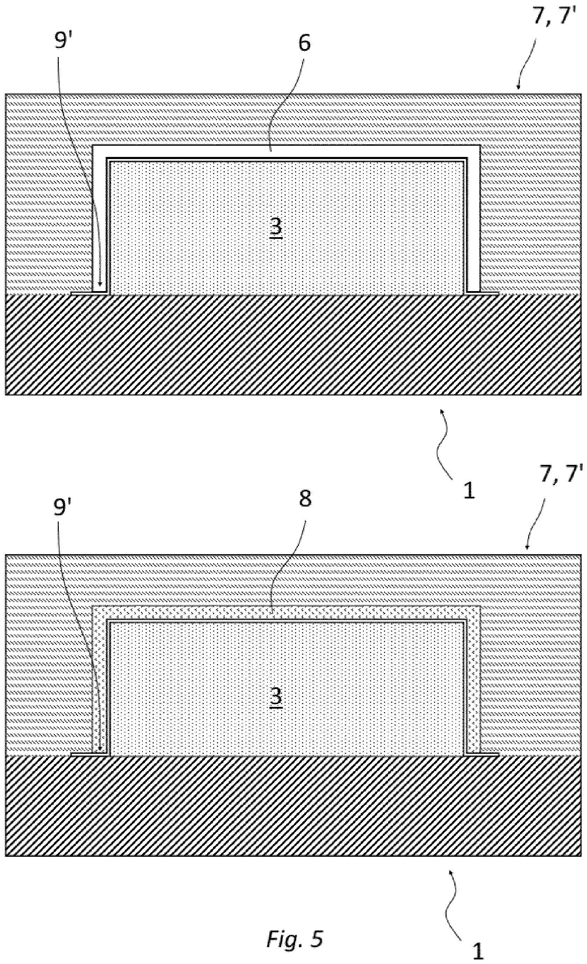

Die in Fig. 4 und Fig. 5 beschrieben weitere Variante des Verfahrens unterscheidet sich nur dahingehend von der ersten Variante, dass die Folie 9 zwischen dem Trägersubstrat 3 und der zu bildenden Oberflächendeckschicht 8 angeordnet wird. Ansonsten sind alle weiteren Verfahrensschritte analog. Wie in Fig. 4 in der unteren Abbildung erkennbar wird die Folie 9 also mit dem ersten Kunststoffmaterial hinterspritzt.

In beiden Varianten kann die Folie 9 eine Dekorfolie und/oder eine Funktionsfolie sein und ein Bestandteil des Außenverkleidungsteils 10 oder des Zierteils werden.

In einer nicht näher dargestellten weiteren Variante kann die Folie 9 nach dem Entformen von dem Trägersubstrat 3 entfernt werden, wobei das Material der Folie 9 zu dem ersten Kunststoffmaterial unterschiedlich ist und ausgebildet ist, mit dem ersten Kunststoffmaterial eine leicht abziehbare Verbindung einzugehen.

In allen vorstehend beschriebenen Varianten kann die Folie 9 eine Dicke im Bereich von 10 µm bis 3.000 µm, bevorzugt im Bereich von 50 µm bis 1.500 µm, weiter bevorzugt im Bereich von 150 µm bis 1.000 µm, weiter bevorzugt im Bereich von 250 µm bis 750 µm aufweisen.

In allen vorstehend beschriebenen Varianten kann das erste Kunststoffmaterial ein transparentes oder transluzentes Kunststoffmaterial zur Ausbildung eines transparenten oder transluzenten Trägersubstrats 3 sein. Das transparente oder transluzente Kunststoffmaterial kann beispielsweise Polypropylen und/oder Polycarbonat und/oder Polyethylenterephthalat und/oder Acrylnitril-Butadien-Styrol und/oder Polymethylmethacrylat und/oder Polyamid und/oder Polyurethan umfassen.

In allen vorstehend beschriebenen Varianten kann das weitere Kunststoffmaterial Polyurethan oder Polyurea umfassen.

In allen beschriebenen Varianten kann die Folie 9 dreidimensional vorgeformt sein, wenn diese in die Werkzeugkavität 2 eingelegt wird.

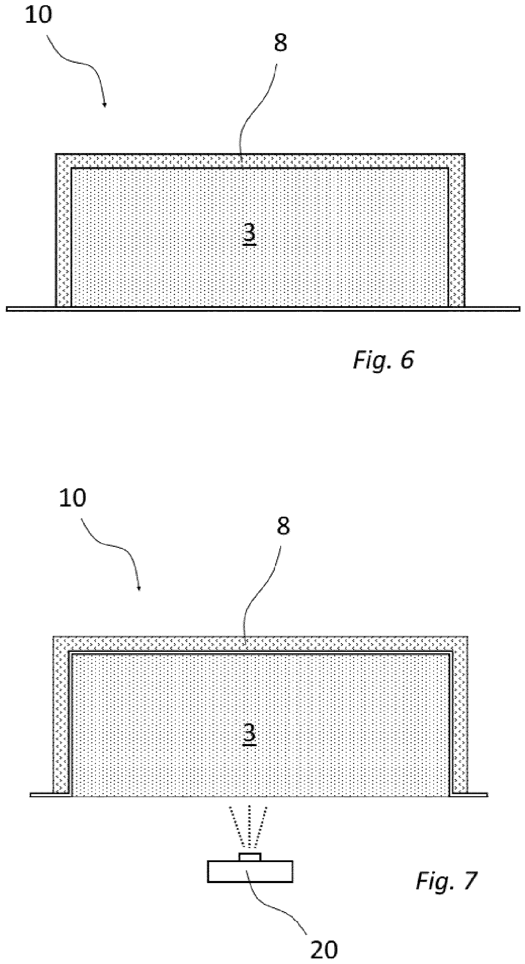

In der Fig. 6 ist ein Außenverkleidungsteil 10 dargestellt, gefertigt nach der ersten Variante des Verfahrens, also mit einer von dem ersten Kunststoffmaterial des Trägersubstrats überspritzten Folie 9.

In der Fig. 7 ist ein Außenverkleidungsteil 10 dargestellt, gefertigt nach der zweiten Variante des Verfahrens, also mit einer von dem ersten Kunststoffmaterial des Trägersubstrats hinterspritzten Folie 9. Die Folie 9 ist hier als Dekorfolie ausgebildet und partiell für Licht durchlässig (z.B. zur Erzeugung eines Schriftzuges oder einer geometrischen Struktur). Das Kunststoffmaterial des Trägersubstrats 3 und das weitere Kunststoffmaterial der Oberflächendeckschicht 8 sind beide transluzent oder transparent ausgebildet, sodass bei einer Hinterleuchtung des Außenverkleidungsteils 10 mit einer Lichtquelle 20, die Dekorfolie 9 entsprechend sichtbar wird.

## Patentansprüche

1. Verfahren zur Herstellung eines Außenverkleidungsteils (10) oder eines Zierteils für Fahrzeuge unter Verwendung eines Spritzgusswerkzeugs (1), umfassend die nachfolgenden Schritte:
- Erzeugen eines Trägersubstrats (3) in einer Werkzeugkavität (2) des Spritzgusswerkzeugs (1) aus einem ersten Kunststoffmaterial,
- Erzeugung einer Zusatzkavität (6) zwischen dem erzeugten Trägersubstrat (3) und einem zur Erzeugung der Zusatzkavität (6) vorgesehenen Werkzeugteil (7) oder Wechselwerkzeugteil (7`) des Spritzgusswerkzeugs (1),
- Einbringen eines weiteren Kunststoffmaterials in die Zusatzkavität (6), wobei das weitere Kunststoffmaterial nach seiner Erstarrung oder Verfestigung eine Oberflächendeckschicht (8) auf oder über dem Trägersubstrat (3) ausbildet, wobei die Oberflächendeckschicht (8) im Reaction Injection Moulding-Verfahren (RIM) auf das Trägersubstrat (3) aufgebracht wird,
- Öffnen des Spritzgusswerkzeugs (1) und Entformen des gebildeten, das Trägersubstrat (3) und die Oberflächendeckschicht (8) umfassenden, Außenverkleidungsteils (10) oder Zierteils,
**dadurch gekennzeichnet, dass**
bei dem Verfahrensschritt der Erzeugung des Trägersubstrats (3) vorab eine Folie (9) in die Werkzeugkavität (2) eingelegt wird, die von dem ersten Kunststoffmaterial überspritzt oder hinterspritzt wird, wobei die Abmessungen der Folie (9) so gewählt und die Werkzeugkavität (2) so ausgebildet ist, dass die Folie (9) das erzeugte Trägersubstrat (3) abschnittsweise oder vollständig randseitig überragt und, dass diese über das Trägersubstrat (3) überstehende Folie (9) im Verfahrensschritt des Einbringens des weiteren Kunststoffmaterials als Dichtung (9`) zwischen dem Werkzeugteil (7) und dem Spritzgusswerkzeug (1) oder als Dichtung (9`) zwischen dem Wechselwerkzeugteil (7`) und dem Spritzgusswerkzeug (1) fungiert.

2. Verfahren nach Anspruch 1, **dadurch gekennzeichnet, dass** die Folie (9) eine Dekorfolie und/oder eine Funktionsfolie ist und ein Bestandteil des Außenverkleidungsteils (10) oder des Zierteils wird.

3. Verfahren nach einem der vorstehenden Ansprüche 1 oder 2, **dadurch gekennzeichnet, dass** die Folie (9) auf der der späteren Oberflächendeckschicht (8) abgewandten Seite des Trägersubstrat (3) angeordnet wird.

4. Verfahren nach einem der vorstehenden Ansprüche 1 oder 2, **dadurch gekennzeichnet, dass** die Folie (9) zwischen dem Trägersubstrat (3) und der zu bildenden Oberflächendeckschicht (8) angeordnet wird.

5. Verfahren nach einem der Ansprüche 1 bis 3, **dadurch gekennzeichnet, dass** die Folie (9) nach dem Entformen von dem Trägersubstrat (3) entfernt wird, wobei das Material der Folie (9) zu dem ersten Kunststoffmaterial unterschiedlich ist und ausgebildet ist, mit dem ersten Kunststoffmaterial eine leicht abziehbare Verbindung einzugehen.

6. Verfahren nach einem der vorstehenden Ansprüche, **dadurch gekennzeichnet, dass** die Folie (9) eine Dicke im Bereich von 10 µm bis 3.000 µm, bevorzugt im Bereich von 50 µm bis 1.500 µm, weiter bevorzugt im Bereich von 150 µm bis 1.000 µm, weiter bevorzugt im Bereich von 250 µm bis 750 µm aufweist.

7. Verfahren nach einem der vorstehenden Ansprüche, **dadurch gekennzeichnet, dass** das erste Kunststoffmaterial ein transparentes oder transluzentes Kunststoffmaterial zur Ausbildung eines transparenten oder transluzenten Trägersubstrats (3) ist.

8. Verfahren nach Anspruch 7, **dadurch gekennzeichnet, dass** das transparente oder transluzente Kunststoffmaterial Polypropylen und/oder Polycarbonat und/oder Polyethylenterephthalat und/oder Acrylnitril-Butadien-Styrol und/oder Polymethylmethacrylat und/oder Polyamid und/oder Polyurethan umfasst.

9. Verfahren nach einem der vorstehenden Ansprüche, **dadurch gekennzeichnet, dass** das weitere Kunststoffmaterial Polyurethan oder Polyurea umfasst.

10. Verfahren nach einem der vorstehenden Ansprüche, **dadurch gekennzeichnet, dass** die Folie (9) dreidimensional vorgeformt ist, wenn diese in die Werkzeugkavität (2) eingelegt wird.
